# FASCICULE DE BREVET EUROPEEN

(11) **EP 2 626 522 B1**
(45) Date de publication et mention de la délivrance du brevet: **07.10.2015**
(21) Numéro de dépôt: 12008243.3
(22) Date de dépôt: 11.12.2012
(51) Int. Cl.: F01D 21/00, G05B 23/02, G07C 5/08, F01D 19/00

(54) **Procédé de surveillance d'un moteur et dispositif correspondant**
Verfahren zur Überwachung eines Motors und entsprechende Vorrichtung
Method for monitoring a motor and corresponding device

(30) Priorité: 08.02.2012 FR 1200377
(43) Date de publication de la demande: 14.08.2013
(73) Titulaire: Airbus Helicopters, 13725 Marignane Cedex (FR)
(72) Inventeur: Vieira, Hilario, F-13130 Berre L'Etang (FR)
(74) Mandataire: GPI & Associés

(56) Documents cités:
- EP-A1- 1 653 050
- EP-A1- 2 006 202
- DE-A1-102008 015 588
- FR-A1- 2 920 056
- JP-A- 3 100 304
- JP-A- 7 217 407
- US-A- 4 280 060

## Description

L'invention se situe dans le domaine technique de la maintenance d'un moteur d'aéronef, et notamment d'un aéronef à voilure tournante.

Classiquement, un aéronef à voilure tournante comporte un rotor principal assurant la sustentation voire la propulsion de cet aéronef. Ce rotor principal est entraîné en rotation par au moins un moteur.

Par exemple, au moins un turbomoteur met en mouvement une boîte de transmission principale de puissance, cette boîte de transmission principale entraînant en rotation le rotor principal.

Un calculateur moteur coopérant éventuellement avec un calculateur avionique est alors utilisé pour contrôler chaque turbomoteur.

Un turbomoteur permet donc de mettre en mouvement un rotor principal d'un aéronef à voilure tournante. Toutefois, chaque turbomoteur comporte usuellement des pièces à durée de vie limitée.

Il convient donc de surveiller ces pièces à durée de vie limitée afin de les remplacer ou de les réparer au moment requis par le constructeur.

Usuellement, une pièce à durée de vie limitée est surveillée au travers d'au moins un paramètre d'ancienneté et d'un seuil maximal de ce paramètre d'ancienneté.

Un opérateur remplit un document dénommé « fiche matricule » afin d'indiquer la valeur courante de chaque paramètre d'ancienneté d'une pièce à durée de vie limitée.

Lorsqu'un paramètre d'ancienneté d'une pièce atteint ou est proche du seuil maximal fixé par le constructeur, une action de maintenance est entreprise pour réparer ou remplacer cette pièce par exemple.

Un tel paramètre d'ancienneté peut être le nombre d'heures de vol effectué par une pièce à durée de vie limitée par exemple. Dans le cadre d'une pièce tournante telle qu'une turbine libre d'un turbomoteur, un autre paramètre d'ancienneté peut être le nombre de rotations effectuées par cette turbine autour de son axe de rotation.

De manière générale, il est courant de définir un nombre de cycles d'usure pour harmoniser l'unité de mesure de la durée de vie entre les diverses pièces à surveiller.

En fonction des conditions d'utilisation de l'aéronef, une heure de vol induit alors un nombre de cycles d'usure variable de chaque pièce à durée de vie limitée.

Selon une première technique connue, le calculateur moteur d'un turbomoteur communique avec des capteurs surveillant le turbomoteur.

Ce calculateur moteur détermine pour chaque pièce à durée de vie limitée un paramètre d'ancienneté relatif à la durée de vie de cette pièce.

Par exemple, le calculateur moteur utilise des lois définies par le constructeur pour déterminer le nombre de cycles d'usure consommés d'une pièce du moteur durant un vol. A l'issue du vol, une telle pièce a alors subi un nombre de cycles d'usure total égal à la somme du nombre de cycles d'usure subi avant le vol et du nombre de cycles d'usure consommés durant le vol.

On nomme par commodité « cycle d'usure consommé » un tel nombre de cycles d'usure consommés durant un vol.

Le calculateur moteur transmet alors le paramètre d'ancienneté déterminé à un moyen d'affichage de l'aéronef, le nombre de cycles d'usure total et le nombre de cycles d'usure consommés de chaque pièce par exemple.

Un pilote peut alors lire la valeur du paramètre d'ancienneté d'une pièce à durée de vie limitée. Ce pilote peut valider cette valeur à partir d'estimations indiquées dans le manuel de vol.

En outre, le pilote ou un opérateur de maintenance reporte la nouvelle valeur du paramètre d'ancienneté de chaque pièce à durée de vie limitée dans la fiche matricule concernée.

Selon une deuxième technique connue, la surveillance est effectuée par un calculateur avionique et non pas par le calculateur moteur.

Ces deux techniques impliquent donc une action du pilote dans la surveillance des moteurs d'un aéronef.

Parmi l'arrière plan technologique éloigné de l'invention, on connaît notamment les documents US 7 617 029, US 2008/0249828 et US 2011/0106551

Le document US 7 617 029 décrit un système pour traiter l'émission d'un signal de panne.

Ce système inclut un organe de surveillance communiquant avec un équipement tel qu'un moteur, afin de surveiller des paramètres de cet équipement. De plus, cet organe de surveillance communique avec un équipement électronique distant par une liaison sans fil pour transmettre des signaux de pannes.

Ce système peut générer des signaux artificiels de pannes dans un but d'entraînement.

Le document US 2008/0249828 présente un système comprenant une unité de contrôle en communication avec des archives, un client, un centre de maintenance et une unité de réparation.

L'unité de contrôle a accès à une base de données mémorisée dans lesdites archives.

Cette unité de contrôle génère un plan de maintenance en utilisant cette base de données, et des instructions de maintenance sont générées. Dès lors, l'unité de contrôle communique un ordre logique au centre de maintenance pour inspecter l'équipement, cet ordre étant basé sur lesdites instructions de maintenance.

Le document US2011/0106551 décrit un procédé de localisation d'un moteur. Selon ce procédé, on reçoit un signal représentatif de la localisation d'un livret matricule du moteur, on utilise ce signal pour déterminer la localisation du moteur, et on mémorise la localisation du moteur.

Le document FR 2 920 056 A1 décrit un dispositif pour estimer une durée de vie attendue sur la base d'un planning probabiliste.

A cet effet, des données opérationnelles de terrain sont analysées pour identifier des tendances. Des plannings d'utilisation sont ainsi obtenus en utilisant des données de terrain et des données de fonctionnement à partir d'un échantillon représentatif des moteurs à turbine.

Par suite, un programme informatique est mis en oeuvre sur un support informatique, dans un système incluant un ensemble de serveur, des systèmes client reliés à l'ensemble de serveur. Cet ensemble de serveur inclut un serveur de base de données, une base de données, un serveur d'application, un serveur interne, un serveur de fax, un serveur répertoire et un serveur de courrier.

Ce document FR 2 920 056 A1 propose donc une méthode probabiliste et un dispositif non embarqué pour déterminer une durée de vie à la conception d'un moteur et non pas pour surveiller en continu un moteur.

Ce document FR 2 920 056 A1 montre des caractéristiques techniques du préambule des revendications 1 et 14.

Le document DE 10 2008 015588 A1 vise des procédés et dispositifs pour contrôler des vannes de turbine à vapeur.

Selon ce procédé, on détermine des caractéristiques fondamentales de multiples modes de fonctionnement des vannes, puis on contrôle le comportement des vannes.

Dès lors, on compare le comportement des vannes avec les caractéristiques fondamentales afin d'identifier les contraintes exercées sur les vannes pour prédire l'usure des vannes.

On connaît aussi les documents JP 7 217407 A et JP 3 100304 A.

Le document US 4 280 060 A décrit un dispositif de contrôle d'un générateur à turbine à gaz.

Le document EP 2 006 202 A1 présente un turbomoteur coopérant avec un calculateur électronique qui commande un moyen d'alarme.

Le document EP 1 653 050 A1 décrit une méthode pour déterminer approximativement la valeur d'un paramètre représentatif de la fatigue d'un composant.

La présente invention a alors pour objet de proposer un procédé de surveillance d'un moteur muni de pièces à durée de vie limitée, visant à au moins minimiser l'implication d'un pilote dans cette surveillance.

Selon l'invention, on met en oeuvre un procédé de surveillance d'un moteur de véhicule muni d'au moins une pièce à durée de vie limitée, chaque pièce étant associée à un paramètre d'ancienneté et à un seuil de durée de vie. Par exemple, ce paramètre d'ancienneté est un nombre de cycles d'usure. Le véhicule est en particulier un aéronef selon l'invention revendiquée.

Suite au démarrage du moteur, les étapes suivantes sont mises en oeuvre :
- durant une étape d'identification, un moyen de stockage temporaire du véhicule mémorise une liste incluant une référence de chaque pièce à durée de vie limitée identifiée dudit moteur,
- durant une étape de recherche d'informations, le moyen de stockage communique avec un système centralisé de données distant du véhicule stockant des données de maintenance incluant au moins pour chaque référence de pièce à durée de vie limitée du constructeur une valeur avant démarrage du paramètre d'ancienneté, le moyen de stockage mémorisant pour chaque pièce à durée de vie limitée identifiée les données de maintenance correspondantes,
- durant une étape de surveillance, on surveille l'usure du moteur en utilisant les informations mémorisées dans ledit moyen de stockage.

Par conséquent, au démarrage du moteur, un moyen de stockage charge une liste de pièces à durée de vie limitée de ce moteur.

De plus, le moyen de stockage charge à partir d'un système centralisé de données les données de maintenance des pièces identifiées.

A ce stade, le moyen de stockage contient les données de maintenance présentes sur les fiches matricules connues.

Dès lors, ce procédé permet de faciliter la maintenance en permettant de recenser les pièces à durée de vie limitée, et d'associer à chaque pièce à durée de vie limitée les données de maintenance adéquates.

Ce procédé peut de plus comporter une ou plusieurs des caractéristiques additionnelles qui suivent.

Par exemple, durant l'étape de surveillance :
∘ un système de calcul calcule une valeur courante du paramètre d'ancienneté de chaque pièce à durée de vie limitée du moteur en prenant en considération la valeur avant démarrage et une valeur consommée de ce paramètre d'ancienneté qui est déterminée pour chaque pièce, telle qu'un nombre de cycles d'usure consommés calculé de chaque pièce,
∘ le système de calcul mémorise la valeur courante du paramètre d'ancienneté de chaque pièce à durée de vie limitée dans le moyen de stockage,
∘ le moyen de stockage actualise le système centralisé de données, la valeur avant démarrage de chaque paramètre d'ancienneté de chaque pièce à durée de vie limitée devenant égale à ladite valeur courante correspondante.

Dès lors, le système de calcul effectue des opérations mémorisées pour actualiser ces données de maintenance au fil du temps.

Le système de calcul détermine notamment une valeur consommée de chaque paramètre d'ancienneté depuis la mise en fonctionnement du moteur pour en déduire une valeur courante totale du paramètre d'ancienneté de chaque pièce à durée de vie limitée surveillée. On entend donc par « valeur consommée » la valeur d'un paramètre d'ancienneté durant une période de fonctionnement allant du démarrage à l'arrêt du moteur.

Cette valeur courante est de fait plus élevée que la valeur mémorisée dans le moyen de stockage au début du fonctionnement du moteur.

Dès lors, le système de calcul communique avec ce moyen de stockage pour réactualiser les données de maintenance.

Ensuite, on réactualise automatiquement le système centralisé de données à partir des informations mémorisées dans le moyen de stockage. Ce moyen de stockage peut être vidé à l'issue du processus.

On note donc qu'un pilote n'a plus à intervenir pour surveiller la durée de vie de pièces à durée de vie limitée. Sa charge de travail est donc minimisée.

Selon un autre aspect, le moyen de stockage peut communiquer par une liaison sans fil avec ledit moteur pour mémoriser ladite liste de pièces à durée de vie limitée identifiée.

Ainsi, chaque pièce à durée de vie limitée peut comporter une radio-étiquette stockant sa référence, une telle radio-étiquette étant parfois dénommé « TAG ».Le moyen de stockage remplit alors une fonction de lecteur des radio-étiquettes pour établir la liste de pièce à surveiller.

La technique connue sous l'acronyme RFID soit « Radio Frequency IDentification » en langue anglaise peut donc être mise en oeuvre.

Il est aussi possible d'utiliser des plaques signalétiques pour établir ladite liste.

Par ailleurs, le moyen de stockage peut communiquer directement avec le système centralisé, via le réseau de données internet par exemple.

Selon une variante, le moyen de stockage communique avec un système centralisé de données au travers d'un moyen de communication du véhicule. Ce moyen de communication peut comprendre un calculateur avionique et une antenne par exemple.

Pour actualiser le système centralisé de données, le calculateur avionique décharge le moyen de stockage et transfère les données acquises au système centralisé.

En outre, les données de maintenance comprennent un seuil maximal pour le paramètre d'ancienneté de chaque pièce à durée de vie limitée dans le système centralisé. Ce seuil maximal correspond à la durée de vie de chaque pièce à durée de vie limitée.

Selon une première réalisation, le système de calcul déclenche une alarme lorsque le seuil maximal est atteint

Selon une deuxième réalisation pouvant être implémentée seul ou en complément de la première réalisation, un opérateur peut déterminer un seuil de maintenance pour chaque pièce à durée de vie limitée identifiée.

Le système de calcul déclenche une alerte lorsque le seuil de maintenance est atteint.

Selon une première variante de la deuxième réalisation, l'opérateur saisit donc directement le seuil de maintenance, au travers d'un nombre de cycles d'usure par exemple.

Selon une deuxième variante de la deuxième réalisation pouvant être implémentée en parallèle de la première variante, pour déterminer le seuil de maintenance, l'opérateur saisit un nombre de période de fonctionnement à réaliser avant épuisement de la durée de vie d'une pièce, chaque période de fonctionnement s'étalant du démarrage à l'arrêt d'un moteur.

Par exemple, dans le cadre d'un aéronef, l'opérateur fixe un nombre de vols à réaliser avant épuisement du paramètre d'ancienneté d'au moins une pièce. Un opérateur partant sur une plateforme en mer peut par exemple saisir deux vols pour être certain de pouvoir aller sur la plateforme et en revenir.

Le système de calcul détermine alors une marge de fonctionnement, cette marge de fonctionnement étant égale au produit de la valeur moyenne du paramètre d'ancienneté par période de fonctionnement et du nombre de périodes de fonctionnement à réaliser avant épuisement.

Le seuil de maintenance est alors égal à la différence du seuil maximal et de la marge de fonctionnement.

Indépendamment de la réalisation, le système de calcul peut donc comparer la valeur courante d'un paramètre d'ancienneté à un seuil, et déclencher une alarme si ce seuil est atteint.

Par ailleurs, on peut afficher sur requête au moins une information stockée dans le moyen de stockage pour permettre à un opérateur de prendre connaissance des ces informations. Au lieu de consulter une fiche matricule, on manipule donc un moyen de signalisation.

Selon un autre aspect, le système de calcul transmet la valeur courante du paramètre d'ancienneté de chaque pièce à durée de vie limitée au moyen de stockage selon une période d'échantillonnage définie par le constructeur.

Par exemple, le moyen de stockage est actualisé toutes les minutes.

Selon une variante, le système de calcul envoie la valeur courante du paramètre d'ancienneté de chaque pièce à durée de vie limitée au moyen de stockage à l'arrêt du moteur seulement.

Le moteur étant monté sur un aéronef, les données de maintenance incluent pour chaque pièce à durée de vie limitée une valeur avant démarrage du paramètre d'ancienneté, un seuil maximal de ce paramètre d'ancienneté et une valeur moyenne par vol de ce paramètre d'ancienneté.

La valeur moyenne par vol est actualisée à l'extinction du moteur.

Outre un procédé, l'invention vise un dispositif de surveillance pour surveiller un moteur d'un aéronef, ce dispositif comprenant un système de calcul communiquant avec au moins un moyen de mesure relatif à une valeur courante d'un paramètre d'ancienneté d'au moins une pièce à durée de vie limitée dudit moteur.

Pour mettre en oeuvre le procédé explicité précédemment, ce dispositif comporte un système centralisé de données distant du véhicule stockant des données de maintenance, le dispositif ayant un moyen de stockage présent dans ledit véhicule qui communique avec ledit moteur pour identifier les pièces à durée de vie limitée du moteur et qui communique avec ledit système centralisé de données pour mémoriser les données de maintenance relatives aux pièces à durée de vie limitée dudit moteur.

Eventuellement, le système de calcul exécute des instructions pour calculer une valeur courante d'un paramètre d'ancienneté de chaque pièce à durée de vie limitée du moteur et pour mémoriser ladite valeur courante du paramètre d'ancienneté de chaque pièce à durée de vie limitée dans le moyen de stockage, ledit moyen de stockage actualisant ledit système centralisé de données.

Le dispositif peut de plus comporter une ou plusieurs des caractéristiques suivantes.

Le dispositif peut comporter au moins un moyen d'identification des pièces à durée de vie limitée du moteur communiquant avec le moyen de stockage. Le moyen d'identification peut comprendre des radio-étiquettes.

En outre, le dispositif peut comporter un moyen de communication en relation avec le moyen de stockage et le système centralisé de données.

Le système de calcul peut comprendre un calculateur moteur de type FADEC, le moyen de communication comprenant un calculateur avionique et une antenne.

Selon un autre aspect, ce dispositif est éventuellement muni d'un moyen de saisie d'un seuil de maintenance, ce moyen de saisi coopérant avec ledit système de calcul.

Ce dispositif comporte éventuellement un moyen d'alarme relié au système de calcul pour déclencher une alarme si un seuil est atteint, à savoir le seuil de maintenance ou le seuil maximal.

Ce dispositif comporte optionnellement un moyen de signalisation affichant sur requête au moins une information stockée dans le moyen de stockage.

Enfin, l'invention concerne un aéronef muni d'un moteur, cet aéronef ayant un dispositif de surveillance tel que décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, un schéma d'un aéronef, et
- la figure 2, un schéma visant à expliciter le procédé mis en oeuvre.

Les éléments présents dans plusieurs figures distinctes sont affectés d'une seule et même référence.

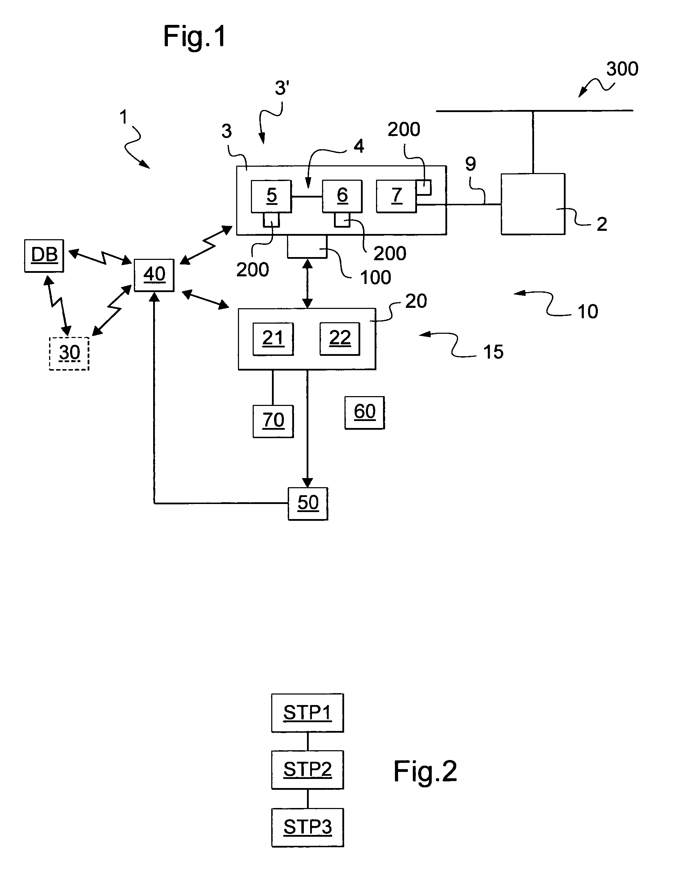

La figure 1 présente un aéronef 1 muni d'une voilure tournante 300.

L'aéronef 1 comporte un groupe de motorisation 3'. Ce groupe de motorisation 3' inclut au moins un turbomoteur 3 pour entraîner la voilure tournante 300 au travers d'une boîte de transmission de puissance principale 2.

Chaque turbomoteur comporte un générateur de gaz 4 et une turbine libre 7. Par exemple, le générateur de gaz comporte un compresseur 5 coopérant avec une turbine haute pression 6 qui est agencée en amont de la turbine libre 7.

La turbine libre 7 est alors liée à la boîte de transmission de puissance principale 2 par une chaîne cinématique 9. Cette chaîne cinématique 9 est munie par exemple d'un arbre de sortie mis en rotation par la turbine libre.

Par ailleurs, l'aéronef 1 comporte un dispositif de surveillance 10 de pièces à durée de vie limitée d'un moteur, et plus précisément du turbomoteur 3. Par exemple, la turbine libre 7, la turbine haute pression 6 et le compresseur 5 sont des pièces à durée de vie limitée.

Ce dispositif de surveillance 10 inclut un moyen de stockage 40 pour mémoriser les données de maintenance relatives aux pièces à durée de vie limitée du moteur 3.

De plus, le dispositif de surveillance 10 comporte au moins un moyen d'identification 200 des pièces à durée de vie limitée du moteur.

En référence à la figure, 2, durant une étape d'identification STP1 le moyen de stockage 40 temporaire mémorise une liste incluant une référence de chaque pièce à durée de vie limitée identifiée du moteur 3.

Par exemple, le moyen de stockage 40 communique par une liaison sans fil avec chaque moyen d'identification 200 du moteur 3 selon la méthode RFID.

En référence à la figure 1, le dispositif de surveillance 10 est de plus muni d'un système centralisé de données DB déporté hors du véhicule, chez le constructeur du moteur et/ou de l'aéronef par exemple.

Ce système centralisé de données DB stocke des données de maintenance incluant au moins pour chaque référence de pièce à durée de vie du constructeur une valeur avant démarrage du paramètre d'ancienneté, voire un seuil maximal de ce paramètre d'ancienneté et une valeur moyenne par vol de ce paramètre d'ancienneté.

Un tel paramètre d'ancienneté est un nombre de cycles d'usure. On se référera à la littérature pour obtenir des informations relatives à cette notion de cycles d'usure.

En référence à la figure 2, durant une étape de recherche d'informations STP2, le moyen de stockage 40 communique avec le système centralisé de données DB pour obtenir les données de maintenance des pièces à surveiller.

Par exemple, un moyen de communication 30 tel qu'un calculateur avionique récupère les données de maintenance à partir du système centralisé de données DB, et transfère ces données de maintenance au moyen de stockage.

Suite à la mise en fonctionnement du moteur 3, on met alors en oeuvre une étape de surveillance STP3 pour surveiller le vieillissement du moteur en utilisant les informations mémorisées dans le moyen de stockage.

On peut utiliser des méthodes classiques.

Toutefois, en référence à la figure 1, le dispositif de surveillance 10 est éventuellement muni à cet effet d'un système de calcul 15.

Ce système de calcul comporte au moins un organe de calcul exécutant des instructions mémorisées de manière non volatile sur un support de stockage pour mettre en oeuvre le procédé.

Par exemple, le système de calcul 15 peut comporter un calculateur moteur 20 par turbomoteur, tel qu'un calculateur moteur de type FADEC (« Full Authority Digital Engine Control » en langue anglaise).

Ce calculateur moteur 20 comporte alors une unité de calcul 21 et une unité de mémoire 22 stockant des instructions exécutables par l'unité de calcul 21.

Ce système de calcul coopère avec un moyen de mesure 100 usuel apte à mesurer la valeur de données relatives aux paramètres d'ancienneté retenu.

Ainsi, à l'aide des mesures effectuées, le calculateur moteur 20 du système de calcul 15 calcule une valeur consommée de ces paramètres d'anciennetés depuis le démarrage du moteur. Cette valeur consommée peut être un nombre de cycles d'usure consommés de chaque pièce à durée de vie limitée du moteur 3.

En réalisant la somme de cette valeur consommée et de la valeur avant démarrage du paramètre d'ancienneté transmis par le système centralisé de données, le calculateur moteur 20 du système de calcul 15 en déduit la valeur courante du paramètre d'ancienneté de chaque pièce.

Le calculateur moteur 20 du système de calcul 15 mémorise alors cette valeur courante du paramètre d'ancienneté de chaque pièce à durée de vie limitée dans le moyen de stockage 40.

La mémorisation peut être réalisée selon une période d'échantillonnage définie par le constructeur ou encore à l'arrêt du moteur.

En parallèle le calculateur moteur 20 du système de calcul 15 peut actualiser une valeur moyenne du paramètre d'ancienneté par vol, un vol commençant au démarrage du moteur et finissant à l'arrêt de ce moteur 3.

Ensuite, le moyen de stockage 40 actualise le système centralisé de données DB, la valeur avant démarrage de chaque paramètre d'ancienneté de chaque pièce à durée de vie limitée devenant égale à ladite valeur courante correspondante. De même, le moyen de stockage procède à la mise à jour de la valeur moyenne par vol le cas échéant.

Ce moyen de stockage peut comporter un processeur exécutant des instructions à cet effet.

De manière alternative, un calculateur avionique peut requérir la mise à jour automatiquement. Sur ordre de ce calculateur avionique, le moyen de stockage transmet les données mémorisées au système centralisé de données DB soit directement soit indirectement via ce calculateur avionique par exemple.

Selon un autre aspect, le dispositif de surveillance comporte un moyen de signalisation 50 pour afficher sur requête au moins une information stockée dans le moyen de stockage 40. Le moyen de signalisation est alors relié au moyen de stockage par une liaison filaire par exemple.

Par ailleurs, ce dispositif comporte optionnellement un moyen d'alarme 70 relié au système de calcul 15 pour déclencher une alarme si une action de maintenance doit être entreprise.

Par exemple, lorsque la valeur courante d'un paramètre d'ancienneté atteint un seuil déclencheur, on déclenche une alarme.

Ce seuil déclencheur d'une alarme peut être le seuil maximal selon un premier mode de réalisation.

Cependant, un opérateur peut souhaiter prendre une marge de sécurité par rapport au seuil maximal, par exemple pour être certain d'accomplir une mission planifiée tel qu'un vol de retour vers un aéroport.

Ainsi, le seuil déclencheur d'alarme peut être un seuil de maintenance inférieur au seuil maximal, ce seuil de maintenance pouvant être déterminé directement ou indirectement par un opérateur.

Le dispositif comporte alors un moyen de saisi 60 relié par une liaison filaire ou non filaire au système de calcul 15.

Un opérateur utilise alors le moyen de saisi 60 pour saisir une donnée permettant d'établir le seuil de maintenance.

Le système de calcul 15 détermine alors pour chaque pièce si le seuil de maintenance est atteint, et généré le cas échéant une alarme.

Par exemple, le seuil de maintenance est saisi directement par l'opérateur, cet opérateur saisissant par exemple un nombre de cycles d'usure.

De manière alternative, le seuil de maintenance est saisi indirectement au travers d'un nombre de période de fonctionnement saisi par l'opérateur, un nombre de vols par exemple dans le cadre d'un aéronef.

Par exemple, l'opérateur peut souhaiter l'émission d'une alarme deux vols avant qu'une action de maintenance soit à réaliser.

A partir du nombre de période de fonctionnement saisi et d'une valeur moyenne de cycles d'usure par vol par pièce à durée de vie limitée, le système de calcul en déduit une marge de fonctionnement par pièce.

L'alarme est alors déclenchée lorsque la valeur courante du paramètre d'ancienneté d'une pièce atteint la différence entre le seuil maximal et la marge de fonctionnement de cette pièce.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de surveillance d'un moteur (3) d'un aéronef muni d'au moins une pièce à durée de vie limitée, ladite pièce étant associée à un paramètre d'ancienneté,
**caractérisé en ce que** suite au démarrage dudit moteur (3), les étapes suivantes sont mises en oeuvre :
- durant une étape d'identification (STP1), un moyen de stockage (40) temporaire de l'aéronef mémorise une liste incluant une référence de chaque pièce à durée de vie limitée identifiée dudit moteur (3),
- durant une étape de recherche d'informations (STP2), le moyen de stockage (40) communique avec un système centralisé de données (DB) distant de l'aéronef stockant des données de maintenance incluant au moins pour chaque référence de pièce à durée de vie limitée du constructeur une valeur avant démarrage du paramètre d'ancienneté, le moyen de stockage mémorisant pour chaque pièce à durée de vie limitée identifiée les données de maintenance correspondantes,
- durant une étape de surveillance (STP3), on surveille au fil du temps l'usure du moteur en utilisant les informations mémorisées dans ledit moyen de stockage.

2. Procédé selon la revendication 1,
**caractérisé en ce que** durant une étape de surveillance (STP3) :
∘ un système de calcul (15) calcule une valeur courante du paramètre d'ancienneté de chaque pièce à durée de vie limitée du moteur (3) en prenant en considération ladite valeur avant démarrage et une valeur consommée de ce paramètre d'ancienneté qui est déterminée pour chaque pièce,
∘ ledit système de calcul (15) mémorise ladite valeur courante du paramètre d'ancienneté de chaque pièce à durée de vie limitée dans le moyen de stockage (40),
∘ ledit moyen de stockage (40) actualise ledit système centralisé de données (DB), la valeur avant démarrage de chaque paramètre d'ancienneté de chaque pièce à durée de vie limitée devenant égale à ladite valeur courante correspondante.

3. Procédé selon l'une quelconque des revendications 1 à 2,
**caractérisé en ce que** ledit moyen de stockage (40) communique par une liaison sans fil avec ledit moteur (3) pour mémoriser ladite liste de pièces à durée de vie limitée identifiée.

4. Procédé selon l'une quelconque des revendications 1 à 3,
**caractérisé en ce que** ledit moyen de stockage (40) communique avec un système centralisé de données (DB) au travers d'un moyen de communication (30) dudit aéronef.

5. Procédé selon l'une quelconque des revendications 1 à 4,
**caractérisé en ce que** ledit paramètre d'ancienneté est un nombre de cycles d'usure.

6. Procédé selon l'une quelconque des revendications 1 à 5,
**caractérisé en ce que** :
- un opérateur détermine un seuil de maintenance pour chaque pièce à durée de vie limitée,
- un système de calcul (15) déclenche une alerte lorsque le seuil de maintenance est atteint.

7. Procédé selon la revendication 6,
**caractérisé en ce que**, pour déterminer le seuil de maintenance, ledit opérateur saisit un nombre de périodes de fonctionnement à réaliser avant épuisement de la durée de vie d'une pièce, chaque période de fonctionnement s'étalant du démarrage à l'arrêt d'un moteur.

8. Procédé selon l'une quelconque des revendications 1 à 7,
**caractérisé en ce que** lesdites données de maintenance comprennent un seuil maximal pour le paramètre d'ancienneté de chaque pièce à durée de vie limitée dans le système centralisé de données (DB), un système de calcul (15) déclenchant une alarme lorsque le seuil maximal est atteint.

9. Procédé selon l'une quelconque des revendications 1 à 8,
**caractérisé en ce que** pour surveiller l'usure du moteur, on compare une valeur courante d'un paramètre d'ancienneté à un seuil, et on déclenche une alarme si ce seuil est atteint

10. Procédé selon l'une quelconque des revendications 1 à 9,
**caractérisé en ce qu'**on affiche sur requête au moins une information stockée dans ledit moyen de stockage (40).

11. Procédé selon la revendication 2,
**caractérisé en ce que** le système de calcul (15) transmet ladite valeur courante du paramètre d'ancienneté de chaque pièce à durée de vie limitée au moyen de stockage selon une période d'échantillonnage définie par le constructeur.

12. Procédé selon la revendication 2,
**caractérisé en ce que** le système de calcul (15) transmet ladite valeur courante du paramètre d'ancienneté de chaque pièce à durée de vie limitée au moyen de stockage à l'arrêt du moteur.

13. Procédé selon l'une quelconque des revendications 1 à 12,
**caractérisé en ce que**, ledit moteur étant monté sur un aéronef, lesdites données de maintenance incluent pour chaque pièce à durée de vie limitée une valeur avant démarrage du paramètre d'ancienneté, un seuil maximal de ce paramètre d'ancienneté et une valeur moyenne par vol de ce paramètre d'ancienneté.

14. Dispositif de surveillance (10) pour surveiller un moteur (3) d'un aéronef (1), ledit dispositif comprenant un système de calcul (15) communiquant avec au moins un moyen de mesure (100) relatif à une valeur courante d'un paramètre d'ancienneté d'au moins une pièce à durée de vie limitée (4, 6, 7) dudit moteur (3),
**caractérisé en ce que** pour mettre en oeuvre le procédé selon l'une quelconque des revendications 1 à 13, ce dispositif comporte un système centralisé de données (DB) distant stockant des données de maintenance, le dispositif ayant un moyen de stockage (40) agencé dans l'aéronef communiquant avec ledit moteur suite au démarrage dudit moteur pour identifier les pièces à durée de vie limitée du moteur et communiquant avec ledit système centralisé de données (DB) pour mémoriser les données de maintenance relatives auxdites pièces à durée de vie limitée dudit moteur (3), ledit système de calcul surveillant au fil du temps l'usure du moteur en utilisant les informations mémorisées dans ledit moyen de stockage.

15. Dispositif de surveillance selon la revendication 14,
**caractérisé en ce que** le dispositif (10) comporte au moins un moyen d'identification (200) des pièces à durée de vie limitée du moteur communiquant avec ledit moyen de stockage (40).

16. Dispositif de surveillance selon l'une quelconque des revendications 14 à 15,
**caractérisé en ce que** ledit dispositif comporte un moyen de communication (30) communiquant avec ledit moyen de stockage (40) et ledit système centralisé de données (DB).

17. Dispositif de surveillance selon l'une quelconque des revendications 14 à 16,
**caractérisé en ce que** ce dispositif comporte un moyen de saisi (60) d'un seuil de maintenance, ce moyen de saisie coopérant avec ledit système de calcul (15).

18. Dispositif de surveillance selon l'une quelconque des revendications 14 à 17,
**caractérisé en ce que** ce dispositif comporte un moyen d'alarme (70) relié au système de calcul (15) pour déclencher une alarme si un seuil est atteint.

19. Dispositif de surveillance selon l'une quelconque des revendications 14 à 17,
**caractérisé en ce que** ce dispositif comporte un moyen de signalisation (50) affichant sur requête au moins une information stockée dans ledit moyen de stockage (40)

20. Aéronef (1) muni d'un moteur (3),
**caractérisé en ce que** ledit aéronef (1) comporte un dispositif de surveillance (10) selon l'une quelconque des revendications 14 à 19.

## Patentansprüche

1. Verfahren zur Überwachung eines Motors (3) eines Luftfahrzeugs mit mindestens einem Teil mit begrenzter Lebensdauer, wobei das Teil mit einem Altersparameter verknüpft ist,
**dadurch gekennzeichnet, dass** nach dem Starten des Motors (3) folgende Schritte ausgeführt werden:
- während eines Identifikationsschritts (STP1) speichert ein Zwischenspeicher (40) des Luftfahrzeugs eine Liste, die für jedes identifizierte Teil des Motors (3) mit begrenzter Lebensdauer einen Richtwert umfasst,
- während eines Schritts (STP2) der Suche nach Informationen kommuniziert der Speicher (40) mit einem zentralen Datensystem (DB) außerhalb des Luftfahrzeugs, welches Wartungsdaten speichert, die mindestens für jeden Richtwert des Konstrukteurs für ein Teil mit begrenzter Lebensdauer einen Wert vor dem Start des Altersparameters umfasst, wobei der Speicher für jedes identifizierte Teil mit begrenzter Lebensdauer die entsprechenden Wartungsdaten speichert,
- während eines Überwachungsschritts (STP3) die Abnutzung des Motors im Laufe der Zeit überwacht wird unter Verwendung der in dem Speicher gespeicherten Informationen.

2. Verfahren nach Anspruch 1,
**dadurch gekennzeichnet, dass** während eines Überwachungsschritts (STP3):
∘ ein Rechensystem (15) einen aktuellen Wert des Altersparameters für jedes Teil des Motors (3) mit begrenzter Lebensdauer berechnet unter Berücksichtigung des Wertes vor dem Start und eines Verbrauchswerts dieses Altersparameters, der für jedes Teil bestimmt ist,
∘ das Rechensystem (15) den aktuellen Wert des Altersparameters für jedes Teil mit begrenzter Lebensdauer in dem Speicher (40) abspeichert,
∘ der Speicher (40) das zentrale Datensystem (DB) aktualisiert, wobei der Wert vor dem Start eines jeden Altersparameters für jedes Teil mit begrenzter Lebensdauer gleich dem entsprechenden aktuellen Wert sein muss.

3. Verfahren nach einem der Ansprüche 1 bis 2,
**dadurch gekennzeichnet, dass** der Speicher (40) über eine drahtlose Verbindung mit dem Motor (3) kommuniziert, um die Liste von identifizierten Teilen mit begrenzter Lebensdauer abzuspeichern.

4. Verfahren nach einem der Ansprüche 1 bis 3,
**dadurch gekennzeichnet, dass** der Speicher (40) mit einem zentralen Datensystem (DB) über ein Kommunikationsmittel (30) des Luftfahrzeugs kommuniziert.

5. Verfahren nach einem der Ansprüche 1 bis 4,
**dadurch gekennzeichnet, dass** der Altersparameter eine Anzahl von Verschleißzyklen ist.

6. Verfahren nach einem der Ansprüche 1 bis 5,
**dadurch gekennzeichnet, dass**
- eine Bedienungsperson einen Schwellenwert der Instandsetzung für jedes Teil mit begrenzter Lebensdauer bestimmt, und
- ein Rechensystem (15) einen Alarm auslöst, wenn der Wartungsschwellenwert erreicht ist.

7. Verfahren nach Anspruch 6,
**dadurch gekennzeichnet, dass** die Bedienungsperson eine Anzahl von Betriebszyklen erfasst, die vor dem Ablauf der Lebensdauer eines Teils zu absolvieren sind, wobei jeder Betriebszyklus sich von dem Start bis zum Anhalten eines Motors erstreckt, um den Wartungsschwellenwert zu bestimmten.

8. Verfahren nach einem der Ansprüche 1 bis 7,
**dadurch gekennzeichnet, dass** die Wartungsdaten einen maximalen Schwellenwert für den Altersparameter eines jeden Teils mit begrenzter Lebensdauer in dem zentralen Datensystem (DB) umfassen, wobei ein Rechensystem (15) einen Alarm auslöst, wenn der maximale Schwellenwert erreicht ist.

9. Verfahren nach einem der Ansprüche 1 bis 8,
**dadurch gekennzeichnet, dass** zur Überwachung der Abnutzung des Motors ein aktueller Wert eines Altersparameters mit einem Schwellenwert verglichen wird und ein Alarm ausgelöst wird, wenn dieser Schwellenwert erreicht wird.

10. Verfahren nach einem der Ansprüche 1 bis 9,
**dadurch gekennzeichnet, dass** auf Anforderung mindestens eine Information angezeigt wird, die in dem Speicher (40) gespeichert ist.

11. Verfahren nach Anspruch 2,
**dadurch gekennzeichnet, dass** das Rechensystem (15) den aktuellen Wert des Altersparameters eines jeden Teils mit begrenzter Lebensdauer an den Speicher während einer von dem Konstrukteur definierten Stichproben-Erhebungsperiode überträgt.

12. Verfahren nach Anspruch 2,
**dadurch gekennzeichnet, dass** das Rechensystem (15) den aktuellen Wert des Altersparameters eines jeden Teils mit begrenzter Lebensdauer an den Speicher beim Anhalten des Motors überträgt.

13. Verfahren nach einem der Ansprüche 1 bis 12,
**dadurch gekennzeichnet, dass**, da der Motor in ein Luftfahrzeug eingebaut ist, die Wartungsdaten für jedes Teil mit begrenzter Lebensdauer einen Wert vor dem Start des Altersparameters, einen maximalen Schwellenwert dieses Altersparameters, und einen Mittelwert pro Flug dieses Altersparameters umfassen.

14. Überwachungsvorrichtung (10) zum Überwachen eines Motors (3) eines Luftfahrzeugs (1), wobei die Vorrichtung ein Rechensystem (15) aufweist, das mit mindestens einem Gerät (100) zum Messen eines aktuellen Werts eines Altersparameters von mindestens einem Teil (4, 6, 7) des Motors (3) mit begrenzter Lebensdauer kommuniziert,
**dadurch gekennzeichnet, dass** die Vorrichtung zur Durchführung des Verfahrens nach einem der Ansprüche 1 bis 13 ein zentrales Ferndatensystem (DB) aufweist, welches Wartungsdaten speichert, wobei die Vorrichtung einen im Luftfahrzeug angeordneten Zwischenspeicher (40) aufweist, der mit dem Motor nach dessen Start kommuniziert, um die Teile des Motors mit begrenzter Lebensdauer zu identifizieren, und um mit dem zentralen Datensystem (DB) zu kommunizieren, um die Wartungsdaten bezüglich der Teile des Motors (3) mit begrenzter Lebensdauer zu speichern, wobei das Rechensystem im Laufe der Zeit den Verschleiß des Motors unter Verwendung der in dem Speicher gespeicherten Informationen überwacht.

15. Überwachungsvorrichtung nach Anspruch 14,
**dadurch gekennzeichnet, dass** die Vorrichtung (10) mindestens ein Mittel (200) zur Identifizierung von Teilen des Motors mit begrenzter Lebensdauer aufweist, welches mit dem Speicher (40) kommuniziert.

16. Überwachungsvorrichtung nach einem der Ansprüche 14 bis 15,
**dadurch gekennzeichnet, dass** die Vorrichtung ein Kommunikationsmittel (30) aufweist, welches mit dem Speicher (40) und dem zentralen Datensystem (DB) kommuniziert.

17. Überwachungsvorrichtung nach einem der Ansprüche 14 bis 16,
**dadurch gekennzeichnet, dass** die Vorrichtung ein Mittel (60) zur Erfassung eines Wartungsschwellenwerts aufweist, wobei dieses Erfassungsmittel mit dem Rechensystem (15) zusammenwirkt.

18. Überwachungsvorrichtung nach einem der Ansprüche 14 bis 17,
**dadurch gekennzeichnet, dass** die Vorrichtung ein Alarmgerät (70) aufweist, das mit dem Rechensystem (15) verbunden ist, um einen Alarm auszulösen, wenn ein Schwellenwert erreicht wird.

19. Überwachungsvorrichtung nach einem der Ansprüche 14 bis 17,
**dadurch gekennzeichnet, dass** die Vorrichtung ein Signalgerät (50) aufweist, das auf Anforderung mindestens eine in dem Speicher (40) gespeicherte Information anzeigt.

20. Luftfahrzeug (1) mit einem Motor (3),
**dadurch gekennzeichnet, dass** das Luftfahrzeug (1) eine Überwachungsvorrichtung (10) nach einem der Ansprüche 14 bis 19 aufweist.

## Claims

1. Method for monitoring an aircraft engine (3) provided with at least one limited-lifetime part, said part being associated with an age parameter,
**characterised in that** after the starting of said engine (3), the following steps are performed:
- during an identification step (STP1), a temporary storage means (40) of the aircraft stores a list including a reference of each identified limited-lifetime part of said engine (3),
- during an information-search step (STP2), the storage means (40) communicates with a centralised data system (DB) remote from the aircraft storing maintenance data including at least for each reference of a limited-lifetime part from the manufacturer a value of the age parameter before starting, the storage means storing the corresponding maintenance data for each identified limited-lifetime part,
- during a monitoring step (STP3), the engine wear is monitored in the course of time by using the information stored in said storage means.

2. Method according to claim 1,
**characterised in that** during a monitoring step (STP3):
∘ a calculation system (15) calculates a current value of the age parameter of each limited-lifetime part of the engine (3) by taking into consideration said value before starting and a consumed value of the age parameter which is determined for each part,
∘ said calculation system (15) stores said current value of the age parameter of each limited-lifetime part in the storage means (40),
∘ said storage means (40) updates said centralised data system (DB), the value before starting of each age parameter of each limited-lifetime part becoming equal to said corresponding current value.

3. Method according to any one of claims 1 to 2,
**characterised in that** said storage means (40) communicates via a wireless connection with said engine (3) to store said list of identified limited-lifetime parts.

4. Method according to any one of claims 1 to 3,
**characterised in that** said storage means (40) communicates with a centralised data system (DB) via a communications means (30) of said aircraft.

5. Method according to any one of claims 1 to 4,
**characterised in that** said age parameter is a number of wear cycles.

6. Method according to any one of claims 1 to 5,
**characterised in that**:
- an operator determines a maintenance threshold for each limited-lifetime part
- a calculation system (15) triggers an alert when the maintenance threshold is reached.

7. Method according to claim 6,
**characterised in that**, in order to determine the maintenance threshold, said operator inputs a number of operating periods to be performed before exhausting the lifetime of a part, each operating period extending from the starting to the stopping of an engine.

8. Method according to any one of claims 1 to 7,
**characterised in that** said maintenance data comprises a maximum threshold for the age parameter of each limited-lifetime part in the centralised data system (DB), a calculation system (15) triggering an alarm when the maximum threshold is reached.

9. Method according to any one of claims 1 to 8,
**characterised in that** in order to monitor the wear of the engine, a current value of an age parameter is compared with a threshold, and an alarm is triggered if the threshold is reached.

10. Method according to any one of claims 1 to 9,
**characterised in that**, on request, at least one piece of information stored in said storage means (40) is displayed.

11. Method according to claim 2,
**characterised in that** the calculation system (15) transmits said current value of the age parameter of each limited-lifetime part to the storage means at a sampling period defined by the manufacturer.

12. Method according to claim 2,
**characterised in that** the calculation system (15) transmits said current value of the age parameter of each limited-lifetime part to the storage means on the stopping of the engine.

13. Method according to any one of claims 1 to 12,
**characterised in that**, said engine being mounted on an aircraft, said maintenance data includes for each limited-lifetime part a value of the age parameter before starting, a maximum threshold of the age parameter and a mean value per flight of the age parameter.

14. Monitoring device (10) for monitoring an engine (3) of an aircraft (1), said device comprising a calculation system (15) communicating with at least one measurement means (100) relating to a current value of an age parameter of at least one limited-lifetime part (4, 6, 7) of said engine (3), **characterised in that** in order to perform the method according to any one of claims 1 to 13, the device comprises a remote centralised data system (DB) storing maintenance data, the device having a temporary storage means (40) arranged in the aircraft communicating with said engine after the starting of said engine, in order to identify the limited-lifetime parts of the engine and communicating with said centralised data system (DB) in order to store the maintenance data relating to said limited-lifetime parts of said engine (3), said calculation system monitoring the engine wear in the course of time by using the information stored in said storage means.

15. Monitoring device according to claim 14,
**characterised in that** the device (10) comprises at least one identification means (200) for identifying the limited-lifetime parts of the engine communicating with said storage means (40).

16. Monitoring device according to any one of claims 14 to 15,
**characterised in that** said device comprises a communications means (30) communicating with said storage means (40) and said centralised data system (DB).

17. Monitoring device according to any one of claims 14 to 16,
**characterised in that** the device comprises an input means (60) for inputting a maintenance threshold, the input means cooperating with said calculation system (15).

18. Monitoring device according to any one of claims 14 to 17,
**characterised in that** the device comprises an alarm means (70) connected to the calculation system (15) for triggering an alarm if a threshold is reached.

19. Monitoring device according to any one of claims 14 to 17,
**characterised in that** the device comprises a signalling means (50) for displaying, on request, at least one piece of information stored in said storage means (40).

20. Aircraft (1) provided with an engine (3),
**characterised in that** said aircraft (1) comprises a monitoring device (10) according to any one of claims 14 to 19.
